# EUROPÄISCHE PATENTANMELDUNG

(11) **EP 2 410 137 A1**
(43) Veröffentlichungstag der Anmeldung: **25.01.2012**
(21) Anmeldenummer: 10007626.4
(22) Anmeldetag: 22.07.2010
(51) Int. Cl.: F01D 25/24, B23K 9/04, B23K 9/028, B23K 9/23, B23K 20/12, B23K 15/00, C23C 26/02, C23C 4/00

(54) **Verfahren zur Herstellung eines groß dimensionierten Bauteils aus Sphäroguss**

(71) Anmelder: Siemens Aktiengesellschaft, 80333 München (DE)
(72) Erfinder: Brussk, Stefan, 45479 Mülheim an der Ruhr (DE); Kern, Torsten-Ulf Dr., 46485 Wesel (DE); Niepold, Karsten, 45481 Mülheim (DE); Sheng, Shilun Dr., 46149 Oberhausen (DE)

(57) **Zusammenfassung**

Ein Verfahren zur Herstellung eines Bauteils aus Sphäroguss weist die Schritte auf: Konstruktion des Bauteils (1) aus Sphäroguss derart, dass das Bauteil (1) aus einer Mehrzahl an Bauteilkomponenten (2, 3) zusammengesetzt ist, die unter Ausbilden von Teilfugen (8) aneinandergelegt sind sowie so dimensioniert und gestaltet sind, dass sie ohne kritische Fehlstellen in ihrem Material aus Späroguss gießbar sind; paarweises Aneinanderliegen der Bauteilkomponenten (2, 3), bei dem von einer Randkante (6) eines Randabschnitts (4) der ersten Bauteilkomponente (2) und einer Randkante (7) eines Randabschnitts (5) der zweiten Bauteilkomponente (3) eine der Teilfugen (8) gebildet wird; Auftragen von Puffermaterial (9, 10) auf die Randkanten (6, 7) durch energiereduziertes Lichtbogenschweißen oder Reibschweißen oder Elektronenstrahlbeschichten oder thermisches Beschichten oder Induktionsbeschichten; Anlegen der zweiten Bauteilkomponente (3) mit ihrem Randabschnitt (5) an den Randabschnitt (4) der ersten Bauteilkomponente (2), so dass die Randkanten (6, 7) mit ihren Puffermaterialien (9, 10) aneinander liegen; Verschweißen der Randabschnitte (4, 5), so dass die von den Randabschnitten (4, 5) gebildete Teilfuge (8) verschweißt ist und dadurch die erste und die zweite Bauteilkomponente (2, 3) miteinander befestigt sind, wodurch die erste und die zweite Bauteilkomponente (2, 3) zumindest teilweise das Bauteil (1) bilden; wobei das Puffermaterial (9, 10) derart gewählt ist, dass beim Verschweißen der Randabschnitte (4, 5) eine Strukturveränderung im Sphärogussmaterial der Bauteilkomponenten (2, 3) unterbunden ist.

## Beschreibung

Die Erfindung betrifft ein Verfahren zur Herstellung eines groß dimensionierten Bauteils aus Sphäroguss.

Sphäroguss ist ein Gusseisen mit Kugelgraphit, mit dem kostengünstig serienmäßig groß dimensionierte Bauteile hergestellt werden können. Beispielsweise ist herkömmlich das Gehäuse einer Dampfturbine in einem bestimmten Temperaturbereich und je nach Bauart aus Sphäroguss gefertigt. Die geometrischen Ausmaße einer Dampfturbine im oberen Leistungsbereich, wie sie beispielsweise in Dampfkraftwerken zur Stromerzeugung eingesetzt werden, sind jedoch so groß, dass beim Gießen des Sphäroguss Probleme auftreten können. So ist beispielsweise die Wahrscheinlichkeit hoch, dass in einem derartigen Dampfturbinengehäuse Unregelmäßigkeiten und Fehlstellen auftreten, die die Festigkeit des Dampfturbinengehäuses beeinträchtigen. Diese Unregelmäßigkeiten und Fehlstellen können je nach Lage in dem Bauteil und Funktion der betroffenen Stellen nicht tolerabel sein. Dadurch ist die maximal zulässige Größe der Gehäusebauteile aus Sphäroguss nach oben begrenzt. Abhilfe würde ein Gehäusebauteil schaffen, das aus mehreren kleinen, gießtechnisch unkritischen Teilen zusammengesetzt ist. Voraussetzung hierfür wäre allerdings, dass diese Teile miteinander verschweißt ein Gehäuse bilden können. Die Teile wären über großflächige Schweißverbindungen miteinander zu verbinden, wofür ein geeignetes Schweißverfahren notwendig wäre. Allerdings ist kein Fertigungsverfahren bekannt, mit dem derart großflächige Schweißverbindungen von Sphäroguss hergestellt werden können, ohne die Eigenschaften in der Schweißnaht wesentlich zu verschlechtern gegenüber dem Grundmaterial.

In aus Sphäroguss hergestellten Gussbauteilen treten in der Regel immer Unregelmäßigkeiten und Fehlstellen auf. Von der Größe und der Lage der Unregelmäßigkeiten und Fehlstellen hängt es ab, ob das betroffene Gussbauteil als Ausschuss verworfen werden muss. Für kleine lokale Fehlstellen sind Reparaturschweißverfahren bekannt. Ein derartiges Reparaturschweißverfahren ist beispielsweise Kaltschweißen mit einer Eisen-Nickel-Legierung. Bei dem konventionellen Kaltschweißverfahren wird jedoch eine Schweißverbindung hergestellt, deren Festigkeit unterhalb der Festigkeit des Sphäroguss liegt. Allein dadurch ist das Kaltschweißverfahren für großflächige Verbindungsschweißungen nicht geeignet. Ein anderes Verfahren ist Warmschweißen, das jedoch nur bei einer Bauteilvorwärmung im Bereich von 500 bis 600°C und eine daran anschließende Wärmenachbehandlung durchführbar ist. Das Warmschweißen ist daher sehr aufwändig und erzeugt einen Verzug des Bauteils, so dass das Warmschweißen für eine großflächige Verbindungsschweißung von Sphäroguss nicht geeignet ist.

Aufgabe der Erfindung ist es, ein Verfahren zur Herstellung eines Bauteils aus Sphäroguss zu schaffen, wobei das Bauteil große Ausmaße und dennoch eine hohe Festigkeit in allen Bereichen hat.

Das erfindungsgemäße Verfahren zur Herstellung eines Bauteils aus Sphäroguss weist die Schritte auf: Konstruktion des Bauteils derart, dass das Bauteil aus einer Mehrzahl an Bauteilkomponenten zusammengesetzt ist, die unter Ausbilden von Teilfugen aneinandergelegt sind sowie so dimensioniert und gestaltet sind, dass sie ohne kritische Fehlstellen in ihrem Material aus Sphäroguss gießbar sind; Herstellen der ersten Bauteilkomponente aus Sphäroguss und der zweiten Bauteilkomponente aus Sphäroguss, Stahlguss oder durch Schmieden; paarweises Bereitstellen der Bauteilkomponenten, wobei eine erste der Bauteilkomponenten und eine zweite der Bauteilkomponenten zum benachbarten Aneinanderliegen vorgesehen sind, bei dem von einer Randkante eines Randabschnitts der ersten Bauteilkomponente und einer Randkante eines Randabschnitts der zweiten Bauteilkomponente eine der Teilfugen gebildet wird; Auftragen von Puffermaterial auf die Randkante der ersten Bauteilkomponente und auf die Randkante der zweiten Bauteilkomponente durch energiereduziertes Lichtbogenschweißen oder Reibschweißen oder Elektronenstrahlbeschichten oder thermisches Beschichten oder Induktionsbeschichten; Anlegen der zweiten Bauteilkomponente mit ihrem Randabschnitt an den Randabschnitt der ersten Bauteilkomponente, so dass die Randkanten mit ihren Puffermaterialien aneinander liegen; Verschweißen der Randabschnitte, so dass die von den Randabschnitten gebildete Teilfuge verschweißt ist und dadurch die erste und die zweite Bauteilkomponente miteinander befestigt sind, wodurch die erste und die zweite Bauteilkomponente zumindest teilweise das Bauteil bilden, wobei das Puffermaterial derart gewählt ist, dass beim Verschweißen der Randabschnitte eine Strukturveränderung im Sphärogussmaterial der Bauteilkomponenten unterbunden ist.

Somit ist das Bauteil aus den mehreren Bauteilkomponenten gebildet, wobei in den Bauteilkomponenten unakzeptable Unregelmäßigkeiten und Fehlstellen im Sphäroguss unterbunden sind. Dadurch ist bei der Konstruktion des Bauteils prinzipiell aufgrund der Verwendung des Sphäroguss keine Obergrenze hinsichtlich der Festigkeit des Bauteils und der finalen Größe gesetzt. Als Strukturveränderung sind insbesondere Aufhärtungen in der Wärmeeinflusszone sowie die Zerstörung der Grundwerkstoffmatrix durch hohe Wärmeeinbringung zu verstehen.

Erfindungsgemäß werden die Bauteilkomponenten in einem Zweistufenschweißprozess zusammengefügt, wobei zuerst auf die als Schweißnahtflanken vorbereitete Randkanten das Puffermaterial aufgetragen wird. Das Puffermaterial ist an den Sphäroguss sowie an das gewählte Verfahren zum Verschweißen der Randabschnitte angepasst. Durch den Zweistufenprozess ist eine großflächige Verbindungsschweißung von den Sphärogussbauteilen ermöglicht. Diese Schweißverbindung hat mechanische Eigenschaften, die vorteilhaft denen des Sphäroguss ähnlich sind. Dadurch kann das Bauteil groß dimensioniert sein, wobei das Bauteil aus kleinen, gießtechnisch unkritischen Bauteilkomponenten aufgebaut ist. Somit ist die Wahrscheinlichkeit von unakzeptablen Unregelmäßigkeiten und Fehlstellen in dem Bauteil gering und die Baubarkeit von dem groß dimensionierten Bauteil ermöglicht.

Das Puffermaterial wird bevorzugt mehrschichtig aufgetragen. Dadurch entsteht ein Anlasseffekt der jeweils vorherig aufgetragenen Schicht bzw. der Wärmeeinflusszone im Werkstoff der Bauteilkomponente. Als das Lichtbogenschweißen wird bevorzugt ein MSG-Auftragschweißen mit einem energiereduzierten Kurzlichtbogen verwendet. Besonders bevorzugt wird das MSG-Auftragschweißen als ein CMT- oder ein Cold-Arc-Prozess ausgeführt. Für das Puffermaterial wird bevorzugt ein Zusatzwerkstoff auf einer Nickelbasis eingesetzt, der bevorzugt einen niedrigen Kohlenstoffgehalt und einen niedrigen Schmelzpunkt verglichen mit dem Sphäroguss aufweist, wie insbesondere SG-NiTi4 oder SG-NiCu30MnTi. Das Reibschweißen ist bevorzugt ein Reibrührschweißen. Dabei wird mittels eines verschleißfesten, rotierenden Werkzeugs Wärmeenergie in zwei benachbart aneinanderliegenden Randkanten eingebracht, wobei das Werkzeug zwischen die Randkanten gedrückt wird. Unter Anpressen der Randkanten an das Werkzeug erwärmen sich die Randkanten bis kurz unterhalb ihres Schmelzpunkts und werden damit plastisch verformbar. Beim Herausziehen des Werkzeugs aus den Randkanten werden ihre Materialien durch die ständige Rotation des Werkzeugs verwirbelt und vermischt. Dadurch bildet sich an den Randkanten nach ihrem Aushärten eine Schweißnaht aus.

Bevorzugt wird als das Puffermaterial jeweils ein Pufferblech auf jede der Randkanten der Bauteilkomponenten mit dem Reibrührschweißen aufgebracht. Das Pufferblech hat dabei bevorzugt einen niedrigeren Schmelzpunkt als der Sphäroguss. Alternativ bevorzugt ist als das Puffermaterial jeweils ein Pufferblech für jede der Randkanten vorzusehen, an denen zwischen ihnen und den Pufferblechen jeweils eine Schweißfolie angeordnet ist, mittels der mit dem Reibrührschweißen das Pufferblech an seine zugehörige Bauteilkomponente befestigt wird. Die Schmelzfolie hat dabei bevorzugt einen niedrigeren Schmelzpunkt als das Sphärogussmaterial, wodurch vorteilhaft der Schmelzpunkt des Pufferblechs in diesem Fall auf den des Sphäroguss nicht abgestimmt zu sein braucht. Die Schweißfolie wird beim Reibrührschweißen an die Randkante angebunden, wobei an der Randkante das Sphärogussmaterial vorteilhaft derart auflegiert, dass die Grafitkugeln in der Schmelzzone des Sphäroguss nicht zerstört werden.

Das thermische Beschichten erfolgt bevorzugt mittels thermischen Spritzens. Besonders bevorzugt ist dabei ein Hochgeschwindigkeitsflammspritzen. Beim Hochgeschwindigkeitsflammspritzen wird das Rohmaterial des Puffermaterials mittels eines Brennstoffstrahls in einer Brennkammer auf eine hohe Geschwindigkeit beschleunigt und auf die Randkante aufgespritzt, wodurch eine dichte Spritzschicht für das Puffermaterial gebildet wird. Vorteilhaft kann beim Hochgeschwindigkeitsflammspritzen die Temperatur des Brennstoffstrahls dahingehend eingestellt werden, dass die Temperatur des Rohmaterials derart sich ergibt, dass während des Hochgeschwindigkeitsflammspritzens beim Ausbilden des Puffermaterials eine thermisch bedingte Strukturveränderung des Sphäroguss vorteilhaft unterbleibt.

Das Puffermaterial wird bevorzugt in Form eines Drahts, eines Bands oder eines Pulvers verwendet und das Auftragen des Puffermaterials erfolgt mittels eines Elektronenstrahls. Das Auftragen des Puffermaterials erfolgt bevorzugt mittels eines Induktionsverfahrens.

Beim Verschweißen der Randabschnitte wird bevorzugt ein Schweißverfahren mit hoher Einschweißtiefe und schmalem Schweißbad sowie kleiner Wärmeeinflusszone verwendet. Bevorzugt ist das Schweißverfahren ein Engspalt- oder ein Nullspaltschweißverfahren. Das Engspalt- oder das Nullspaltschweißverfahren ist besonders bevorzugt Elektronenstrahlschweißen oder Laserstichlochschweißen oder Lichtbogenengspaltschweißen. Die Stärke des Puffermaterials und die Parameter des Engspalt- oder des Nullspaltschweißverfahren sowie des Lichtbogenschweißens oder des Reibschweißens oder des thermischen Beschichtens werden bevorzugt derart gewählt, dass die Wärmeeinflusszone der Verschweißung durch das Engspalt- oder das Nullspaltschweißverfahren in dem Puffermaterial angeordnet ist.

Ferner ist es bevorzugt, dass der Stahlguss der zweiten Bauteilkomponente niedrig legierter Stahlguss mit insbesondere 0,5 bis 2,5 Cr oder hoch legierter Stahlguss mit insbesondere 8 bis 15 Cr ist. Das Bauteil ist bevorzugt mit mindestens einer Bauteilkomponenten aus einem hoch- oder niedrig legierten Stahlguss gebildet. Dabei wird die Stahlgusskomponente, insbesondere aus 0,5 bis 2,5 Cr oder 8 bis 15 Cr, mit einer Sphärogusskomponente verschweißt. Das erfindungsgemäße Verfahren kann insbesondere für eine Reparatur des Bauteils verwendet werden, indem von dem Bauteil ein beschädigter Abschnitt herausgetrennt wird und durch einen neuen Abschnitt ersetzt wird. Der neue Abschnitt wird unter Anwendung des erfindungsgemäßen Verfahrens in das bestehende Bauteil eingeschweißt, wobei der neue Abschnitt nicht aus Sphäroguss gebildet sein muss. Es kann vorteilhaft ein Stahlguss- oder ein Schmiedeteil eingefügt werden. Ferner ist das erfindungsgemäße Verfahren für Konstruktionsschweißungen geeignet.

Im Folgenden wird eine bevorzugte Ausführungsform eines mit dem erfindungsgemäßen Verfahren hergestellten Bauteils anhand der beigefügten schematischen Zeichnungen erläuterte. Es zeigen:
Fig. 1 eine perspektivische Ansicht einer erfindungsgemäßen Ausführungsform des Bauteils,
Fig. 2 einen Querschnitt durch einen Randabschnitt einer ersten Bauteilkomponente des Bauteils nach einem ersten Herstellungsschritt, wobei eine Pufferschicht mit einem MSG-Auftragschweißverfahren mit einem energiereduzierten Kurzlichtbogen bzw. durch Spritzen aufgetragen ist,
Fig. 3 den Querschnitt aus Figur 2, wobei für die Pufferschicht ein Pufferblech mit dem Reibrührschweißen angebracht ist,
Fig. 4 den Querschnitt aus Figur 3, wobei zusätzlich zwischen dem Randabschnitt und dem Pufferblech eine Schweißfolie eingefügt ist, und
Fig. 5 einen Querschnitt der Randabschnitte der ersten Bauteilkomponente und einer zweiten Bauteilkomponente des Bauteils nach einem zweiten Herstellungsschritt.

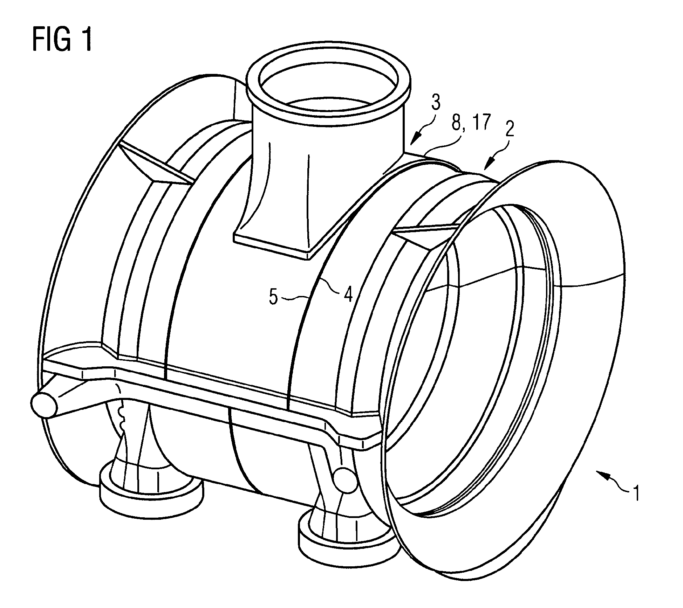

Wie es aus Fig. 1 bis 5 ersichtlich ist, ist ein Bauteil,als ein Dampfturbinen-Niederdruck-Innengehäuse 1 gezeigt. Das Gehäuse 1 setzt sich zusammen aus mehreren Bauteilkomponenten, insbesondere einer ersten Bauteilkomponente 2 und einer zweiten Bauteilkomponente 3. Die Bauteilkomponenten 2, 3 sind aneinander gelegt und bilden eine Teilfuge 8 aus. Ferner sind die Bauteilkomponenten 2, 3 so dimensioniert und gestaltet, dass sie ohne kritische Fehlstellen in ihrem Material aus Sphäroguss herstellbar sind.

Die erste Bauteilkomponente 2 weist einen Randabschnitt 4 auf, der unmittelbar benachbart neben einem Randabschnitt 5 der zweiten Bauteilkomponente 3 angeordnet ist. Der Randabschnitt 4 der ersten Bauteilkomponente 2 ist von einer Randkante 6 begrenzt, die stumpf an einer Randkante 7 anliegt, die den Randabschnitt 5 der zweiten Bauteilkomponente 3 begrenzt. Dadurch ist die Teilfuge 8 von den Randkanten 6, 7 gebildet.

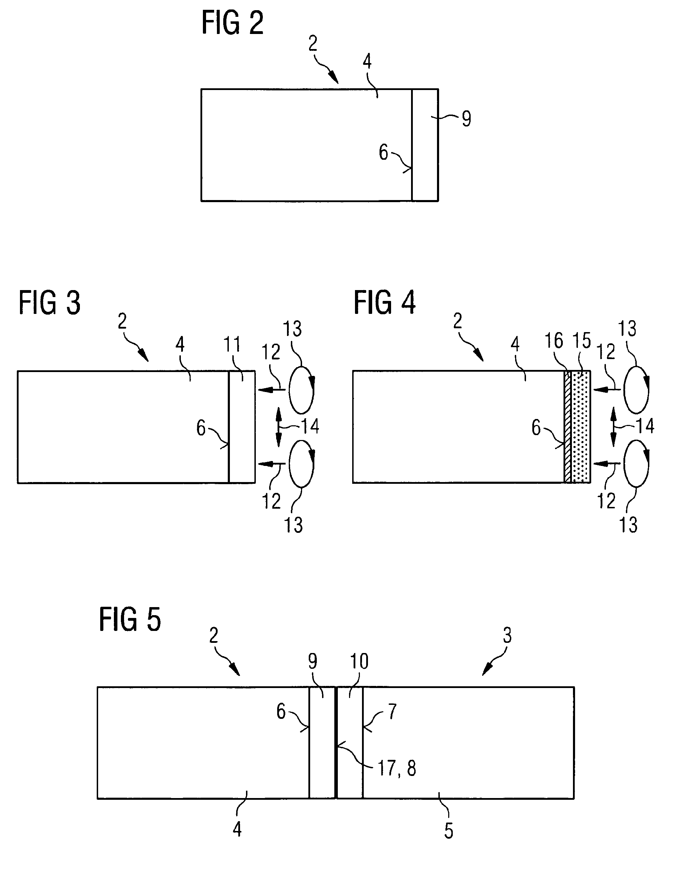

Beim Herstellen des Gehäuses 1 werden die erste Bauteilkomponente 2 und die zweite Bauteilkomponente 3 separat in einem Sphärogussverfahren aus Sphäroguss hergestellt. Dabei ist die Gefahr gering, dass sich in den Bauteilkomponenten 2, 3 kritische Fehlstellen ausbilden. In einem ersten Fertigungsschritt wird die erste Bauteilkomponente 2 bereitgestellt (Fig. 2). Auf ihre Randkante 6 wird eine erste Puffermaterialschicht 9 über ein MSG-Auftragschweißverfahren mit einem energiereduzierten Kurzlichtbogen aufgebracht. Das MSG-Auftragschweißverfahren ist mit einem Cold-Arc-Prozess ausgeführt, bei dem mittels Veränderung der Stromstärke in Abhängigkeit vom Spannungsverlauf der Prozess derart geführt wird, dass der Energieeintrag in die Bauteilkomponente 2 insbesondere beim Wiederzünden des Kurzlichtbogens minimal ist. Nach dem Aufbringen der ersten Puffermaterialschicht 9 wird eine zweite Puffermaterialschicht durch das selbe Verfahren aufgebracht.

Die Wärmeeinflusszone der ersten Puffermaterialschicht 9 ist in dem Randabschnitt 4 der ersten Bauteilkomponente 2 angeordnet, wohingegen die Wärmeeinflusszone der zweiten Puffermaterialschicht in der ersten Puffermaterialschicht 9 angeordnet ist. Die Randkante 7 des Randabschnitts 5 der zweiten Bauteilkomponente 3 wird ebenfalls wie die Randkante 6 mit einer ersten Puffermaterialschicht 10 und einer zweiten Puffermaterialschicht versehen. Alternativ kann die Puffermaterialschicht 9 bzw. 10 durch ein Spritzverfahren hergestellt werden.

Fig. 3 zeigt die Bauteilkomponente 2, bei der mittels Reibrührschweißen ein Pufferblech 11 an die Randkante 6 des Randabschnitts 4 geschweißt ist, wobei das Pufferblech 11 einen niedrigeren Schmelzpunkt als der Sphäroguss hat. Beim Reibrührschweißen des Pufferblechs 11 an die Randkante 6 wird das Pufferblech 11 an die Randkante 6 gelegt, wobei zwischen dem Pufferblech 11 und der Randkante 6 ein Fügespalt ausgebildet wird. Ein rotierendes Werkzeug (nicht dargestellt) wird auf das Blech gesetzt und in den von Pfeil 14 gezeigten Richtungen hin- und herbewegt. Pfeile 13 zeigen die Rotationsrichtung des Werkzeugs, Pfeile 12 zeigen die Richtung, in die das Pufferblech 11 auf das Werkzeug gedrückt wird. Beim Herausziehen des Werkzeugs aus dem Fügespalt werden die Randkante 6 und das Pufferblech 11 zusammengeschweißt. Da beim Zusammenschweißen der Randkante 6 und des Pufferblechs 11 keine Schmelze entsteht, unterbleibt eine Strukturveränderung des Sphäroguss der Bauteilkomponente 2. Damit der durch das Rührreibschweißen verursachte Energieeintrag in den Sphäroguss lediglich von diesem und nicht von dem Pufferblechmaterial bestimmt ist, ist das Pufferblechmaterial so gewählt, dass sein Schmelzpunkt niedriger als der des Sphäroguss ist.

Fig. 4 zeigt die Bauteilkomponente 2, die statt wie in Fig. 3 mit einem Pufferblech 15 zusammen rührreibgeschweißt ist. Zwischen der Randkante 6 und dem Pufferblech 15 ist eine Schweißfolie 16 angeordnet, deren Material einen niedrigeren Schmelzpunkt als der Sphäroguss hat. Dadurch braucht das Material für das Pufferblech 15 bezüglich seines Schmelzpunkts nicht auf den Sphäroguss abgestimmt zu sein. Das Pufferblech 15 ist mittels der Schweißfolie 16 an die Randkante 6 derart rührreibgeschweißt, dass mittels der Schweißfolie 16 der Sphäroguss auflegiert ist, wodurch eine Strukturveränderung in der Grafitstruktur des Sphäroguss unterbunden wird.

Fig. 5 zeigt zwei Bauteilkomponenten 2 und 3 nach einem zweiten Fertigungsschritt. Die Bauteilkomponenten 2 und 3 sind mit ihren Randabschnitten 4 und 5 aneinander gelegt worden, so dass die Teilfuge 8 sich ausgebildet hat. Die Teilfuge 8 wurde mit einem Engspalt- oder einem Nullspaltschweißverfahren verschweißt. Dabei kommt ein Elektronenstrahlschweißverfahren oder ein Laserstichlochschweißverfahren oder ein Lichtbogenengspaltschweißverfahren zum Einsatz, wobei die Wärmeeinflusszonen der bei dem Schweißverfahren gebildeten Schweißnaht 17 in den Puffermaterialschichten angeordnet ist.

## Patentansprüche

1. Verfahren zur Herstellung eines Bauteils aus Sphäroguss, mit den Schritten:
Konstruktion des Bauteils (1) derart, dass das Bauteil (1) aus einer Mehrzahl an Bauteilkomponenten (2, 3) zusammengesetzt ist, die unter Ausbilden von Teilfugen (8) aneinandergelegt sind sowie so dimensioniert und gestaltet sind, dass sie ohne kritische Fehlstellen in ihrem Material aus Späroguss gießbar sind;
Herstellen der ersten Bauteilkomponente (2) aus Sphäroguss und der zweiten Bauteilkomponente (3) aus Sphäroguss, Stahlguss oder durch Schmieden;
paarweises Bereitstellen der Bauteilkomponenten (2, 3), wobei eine erste der Bauteilkomponenten (2) und eine zweite der Bauteilkomponenten (3) zum benachbarten Aneinanderliegen vorgesehen sind, bei dem von einer Randkante (6) eines Randabschnitts (4) der ersten Bauteilkomponente (2) und einer Randkante (7) eines Randabschnitts (5) der zweiten Bauteilkomponente (3) eine der Teilfugen (8) gebildet wird;
Auftragen von Puffermaterial (9, 10) auf die Randkante (6) der ersten Bauteilkomponente (2) und auf die Randkante (7) der zweiten Bauteilkomponente (3) durch energiereduziertes Lichtbogenschweißen oder Reibschweißen oder Elektronenstrahlbeschichten oder thermisches Beschichten oder Induktionsbeschichten;
Anlegen der zweiten Bauteilkomponente (3) mit ihrem Randabschnitt (5) an den Randabschnitt (4) der ersten Bauteilkomponente (2), so dass die Randkanten (6, 7) mit ihren Puffermaterialien (9, 10) aneinander liegen;
Verschweißen der Randabschnitte (4, 5), so dass die von den Randabschnitten (4, 5) gebildete Teilfuge (8) verschweißt ist und dadurch die erste und die zweite Bauteilkomponente (2, 3) miteinander befestigt sind, wodurch die erste und die zweite Bauteilkomponente (2, 3) zumindest teilweise das Bauteil (1) bilden, wobei das Puffermaterial (9, 10) derart gewählt ist, dass beim Verschweißen der Randabschnitte (4, 5) eine Strukturveränderung im Sphärogussmaterial der Bauteilkomponenten (2, 3) unterbunden ist.

2. Verfahren gemäß Anspruch 1,
wobei das Puffermaterial (9, 10) mehrschichtig aufgetragen wird.

3. Verfahren gemäß Anspruch 1 oder 2,
wobei als das Lichtbogenschweißen ein MSG-Auftragschweißen mit einem energiereduzierten Kurzlichtbogen verwendet wird.

4. Verfahren gemäß Anspruch 3,
wobei das MSG-Auftragschweißen als ein CMT- oder ein Cold-Arc-Prozess ausgeführt wird.

5. Verfahren gemäß Anspruch 3 oder 4,
wobei zum Auftragen des Puffermaterials (9, 10) ein Zusatzwerkstoff auf einer Nickelbasis, insbesondere SG-NiTi4 oder SG-NiCu30MnTi, verwendet wird.

6. Verfahren gemäß Anspruch 1 oder 2,
wobei das Reibschweißen ein Reibrührschweißen ist.

7. Verfahren gemäß Anspruch 6,
wobei als das Puffermaterial (9, 10) jeweils ein Pufferblech (11) auf jede der Randkanten (6, 7) der Bauteilkomponenten (2, 3) mit dem Reibrührschweißen aufgebracht wird.

8. Verfahren gemäß Anspruch 6,
wobei als das Puffermaterial (9, 10) jeweils ein Pufferblech (15) für jede der Randkanten (6, 7) vorgesehen ist, an denen zwischen ihnen und den Pufferblechen (15) jeweils eine Schweißfolie (16) angeordnet ist, mittels der mit dem Reibrührschweißen das Pufferblech (15) an seine zugehörige Bauteilkomponente befestigt wird.

9. Verfahren gemäß Anspruch 1 oder 2,
wobei das thermische Beschichten ein thermisches Spritzen ist.

10. Verfahren gemäß Anspruch 9,
wobei als das thermische Spritzen ein Hochgeschwindigkeitsflammspritzen verwendet wird.

11. Verfahren gemäß Anspruch 1 oder 2,
wobei beim Elektronenstrahlbeschichten das Puffermaterial (9, 10) in Form eines Drahts, eines Bands oder eines Pulvers aufgeschmolzen wird.

12. Verfahren gemäß Anspruch 1 oder 2,
wobei beim Induktionsbeschichten das Puffermaterial (9, 10) derart aufgeschmolzen wird, dass eine Strukturveränderung im Sphärogussmaterial der Bauteilkomponenten (2, 3) unterbunden ist.

13. Verfahren gemäß einem der Ansprüche 1 bis 12,
wobei beim Verschweißen der Randabschnitte (4, 5) ein Schweißverfahren mit hoher Einschweißtiefe und schmalem Schweißbad sowie kleiner Wärmeeinflusszone verwendet wird.

14. Verfahren gemäß einem der Ansprüche 1 bis 13,
wobei das Schweißverfahren ein Engspalt- oder ein Nullspaltschweißverfahren ist.

15. Verfahren gemäß Anspruch 14, wobei das Engspalt- oder das Nullspaltschweißverfahren Elektronenstrahlschweißen oder Laserstichlochschweißen oder Lichtbogenengspaltschweißen ist.

16. Verfahren gemäß Anspruch 14 oder 15,
wobei die Stärke des Puffermaterials (9, 10) und die Parameter des Engspalt- oder des Nullspaltschweißverfahren derart gewählt werden, dass die Wärmeeinflusszone durch das Verschweißen mit dem Schweißverfahren in dem Puffermaterial (9, 10) angeordnet ist.

17. Verfahren gemäß einem der Ansprüche 1 bis 16,
wobei der Stahlguss der zweiten Bauteilkomponente (3) niedrig legierter Stahlguss mit insbesondere 0,5 bis 2,5 Cr oder hoch legierter Stahlguss mit insbesondere 8 bis 15 Cr ist.
